# EUROPÄISCHE PATENTSCHRIFT

(11) **EP 1 365 658 B1**
(45) Veröffentlichungstag und Bekanntmachung des Hinweises auf die Patenterteilung: **31.08.2005**
(21) Anmeldenummer: 02700089.2
(22) Anmeldetag: 01.03.2002
(51) Int. Cl.: A23G 1/18, A23G 1/12, A23G 1/10

(54) **VERFAHREN UND ANLAGE ZUR VEREDELUNG VON KAKAO- ODER SCHOKOLADEMASSEN**
METHOD AND ARRANGEMENT FOR IMPROVING COCOA OR CHOCOLATE PRODUCTS
PROCEDE ET DISPOSITIF D'AFFINAGE DE PATES DE CACAO OU DE CHOCOLAT

(30) Priorität: 09.03.2001 DE 10111679
(43) Veröffentlichungstag der Anmeldung: 03.12.2003
(73) Patentinhaber: Bühler AG, 9240 Uzwil (CH)
(72) Erfinder: ZENG, Yuantong, CH-9244 Niederuzwil (CH); BOLLER, Edwin, CH-9240 Uzwil (CH)
(74) Vertreter: Frommhold, Joachim
(86) Internationale Anmeldenummer: PCT/CH2002/000127
(87) Internationale Veröffentlichungsnummer: WO 2002/071858

(56) Entgegenhaltungen:
- EP-A- 0 575 070
- EP-A- 0 954 991
- WO-A-00/72695
- WO-A-02/13618
- FR-A- 2 317 961
- US-A- 3 985 607
- US-A- 4 272 558
- US-A- 5 230 919
- PATENT ABSTRACTS OF JAPAN vol. 1997, no. 08, 29. August 1997 (1997-08-29) -& JP 09 098759 A (NORITAKE CO LTD), 15. April 1997 (1997-04-15)

## Beschreibung

Die Erfindung bezieht sich auf ein Verfahren und eine Anlage zur Veredelung von förderbaren Fettmassen, insbesondere kakaohattigen oder schokoladeähnlichen Fettmassen, nach dem Oberbegriff von Anspruch 1 bzw. Anspruch 20.

Bei der Kakaoverarbeitung werden fermentierte und geröstete Kakaobohnen vermahlen, wodurch mehr oder weniger flüssige Kakaomasse gewonnen wird. In der Regel wird hiervon ein Teil des in den Kakaobohnen enthaltenen Fettes, die Kakaobutter, abgepresst. Aus dem verbleibenden fettärmeren Teil erhält man Kakaopulver. Zur Herstellung von Schokolade werden Kakaomasse, Kakaobutter, Kristallzucker, Milchpulver und ggf. andere Fette und Emulgator vermischt. Das Milchpulver enthält je nach Herstellungsverfahren das Milchfett vorwiegend in freier Form (Walzenmilch) oder in gebundener Form (Sprühmilch).

Gemäss einem bekannten Verfahren zur Schokoladeherstellung werden die Schokoladebestandteile in einem Mischer vermischt und dann über ein Vorwalzwerk, das aus einem Walzenpaar besteht, und ein sich daran anschliessendes Feinwalzwerk (Fünfwalzwerk) auf die gewünschte Grösse zerkleinert und homogenisiert. Durch die Zerkleinerung des Kristallzuckers entstehen an den Bruchstellen der Zuckerkristalle Oberflächen, an denen sich die vorwiegend im Kakao und im Milchpulver enthaltenen Aromastoffe anlagern. Durch die Zerkleinerung der Kakaoteilchen und der Milchpulverteilchen wird weiteres Fett freigesetzt, das sich an den Teilchen als freies Fett anlagert.

Zur "Veredelung" der Schokolademasse wird im Anschluss an die Walzwerkstufen das gewonnene krümelige Walzgut durch Conchieren in eine fliessfähige Suspension von Zucker-, Kakao und Milchpulverteilchen in der Kakaobutter umgewandelt, wobei die Teilchen von der Kakaobutter umhüllt werden. Dabei werden ggf. Emulgatoren wie z. B. Lezithin in geringen Mengen der Conche hinzugegeben. In der Conche wird durch mechanischen Energieeintrag vorwiegend Ober Scherkräfte eine Desagglomerierung des Walzgutes bewirkt. Ausserdem wird durch den mechanischen Energieeintrag in die Schokolademasse und die damit bewirkte ständige Neubildung von Oberflächen in der nur teilweise gefüllten Conche sowie durch den damit verbundenen Temperaturanstieg das Entweichen ungewollter, meist flüchtiger Aromastoffe begünstigt.

Kakao- oder Schokolademasse lassen sich auch nach einem Dünnschichtverfahren z.B. gemäss der US 3,985,607 veredeln. Ein Dünnschichtverdampfer besteht aus einem rotierenden zylindrischen Innenteil, dem Rotor, und einem feststehenden zylindrischen Aussenteil, dem Stator. Nach der Einführung in den Dünnschichtverdampfer wird die Kakao- oder Schokolademasse mit dem umlaufenden Rotor in dünner Schicht auf der Innenwand des Stators verteilt und bearbeitet. Neben dieser mechanischen Behandlung erfolgt gleichzeitig eine thermische Entgasung.

In einem Dünnschichtverdampfer erfolgt die Energiezufuhr eindeutig Ober den Rotor, wobei aber diese Anordnung mit hohem Energieverlust durch Reibung verbunden ist. Die verbleibende Energie wird hauptsächlich auf die Masse in unmittelbarem Kontakt mit dem Rotor fokussiert Das heisst, obgleich die Leistungsaufnahme in der Umgebung des Rotors sehr hoch ist, bleibt die Masse, die keinen direkten Kontakt mit dem Rotor bekommt, weitgehend unbeeinflusst, und die durchschnittliche Leistungszuführung über die gesamte Masse ist niedrig. Der Stoffaustausch zwischen der Masse und dem Gas erfolgt überwiegend über die Oberfläche des Massenfilms (vorwiegend zweidimensional).

Der Erfindung liegt nun die Aufgabe zugrunde, förderbare Fettmassen, insbesondere kakaohaltige oder schokoladeähnliche Fettmassen, kostengünstig, energiesparend und in einem von den bekannten Veredelungsverfahren unabhängigen Verfahrenschritt zu veredeln, indem in der Fettmasse enthaltenes Wasser der Masse entzogen wird sowie ungewollte Aromastoffe umgewandelt und/oder aus der Masse entfernt werden.

Diese Aufgabe wird durch das Verfahren nach Anspruch 1 und die Anlage nach Anspruch 20 gelöst.

Bei dem erfindungsgemässen Verfahren zur Veredelung der förderbaren Fettmasse (im folgenden auch einfach als "Masse" bezeichnet) wird in einer Veredelungsstufe die flüssige Masse mittels eines Gases in einen statischen Mischer mit Einbauten hinein und durch diesen hindurch transportiert, indem gleichzeitig mit der Masse das Gas oder ein Gasgemisch wie z.B. Luft durch den statischen Mischer hindurch gepumpt wird, wobei die Oberfläche der durch das Gas im statischen Mischer transportierten Masse ständig verändert und neu gebildet wird und dabei dem Gas ausgesetzt ist und der Stoffübergang intensiviert wird (vorwiegend dreidimensional), so dass Feuchtigkeit sowie weitere flüchtige Bestandteile aus der Masse in die Gasphase entweichen und mit dem Gasstrom abgeführt werden. Die transportierte Masse ist hierbei die diskontinuierliche Phase (Tröpfchen) während das Gas die kontinuierliche Phase bildet (Volumenstrom).

Da das erfindungsgemässe Verfahren mittels eines statischen Mischers mit Einbauten durchgeführt wird, treten bei der Behandlung der förderbaren Masse hauptsächlich fluiddynamische Scherbeanspruchungen auf. Zusätzlich treten mechanische Scherkräfte auf, die durch Bewegung der Masse im statischen Mischer verursacht werden. Die Energiezufuhr (Energieeintrag) in die zu veredelnde Masse ergibt sich vorwiegend durch die thermische und fluiddynamische Energie des Transportgases sowie die Bewegungsenergie der Masse. Das Gas hat bei dem erfindungsgemässen Verfahren mehrere Wirkungen. Einerseits bewirkt es durch den hydrodynamischen Mitnahmeeffekt den Transport der pumpbaren flüssigen Masse in den statischen Mischer hinein und durch ihn hindurch. Andererseits bewirkt es, je nach den Volumenstromverhältnissen eine Zerstäubung der flüssigen Masse, so dass die Masse in Form von Tröpfchen verschiedener Grösse im Gasstrom transportiert wird oder Gasblasen im Massenstrom transportiert werden. Hat z.B. das Gas eine geringe relative Feuchtigkeit, wird der Entzug von Wasser aus der Masse begünstigt, wodurch insbesondere auch solche ungewollten Aromabestandteile entzogen werden, für die die Wassermotekute als Träger wirken.

Vorzugsweise prallen beim Transport dieses Tröpfchen- oder Gasblasenstroms durch den statischen Mischer die Tröpfchen oder ggf. Gasblasen wiederholt auf die Einbauten des statischen Mischers, wodurch sie beim Aufprall weiter zerstäubt werden und die Oberfläche der Tröpfchen und somit der Masse insgesamt stark erhöht wird. Aufgrund des zunehmenden Dispersionsgrades im Massestrom entlang des statischen Mischers und durch die ständige Neubildung und Umformung der Oberflächen der Tröpfchen oder ggf. Gasblasen wird das Austreiben ungewollter flüchtiger Aromabestandteile aus der Fettmasse (kakaohaltig oder schokoladenähnlich) zusätzlich begünstigt.

Zweckmässigerweise wird das Verfahren derart betrieben, dass das Verhältnis zwischen dem Volumendurchsatz des Gases und dem Volumendurchsatz der Masse zwischen 100:1 und 0,5:1, vorzugsweise zwischen 60:1 und 10:1 und vorteilhafterweise bei etwa 20:1 liegt. Dadurch werden die entwichenen ungewollten Aromamoleküle dem Diffusionsgleichgewicht an der Grenzfläche zwischen Masse und Gas ständig entzogen, wodurch das Zurückdiffundieren der entwichenen ungewollten Aromastoffe erschwert wird.

Je nach Art der zu veredelnden Masse fährt man mit Temperaturen im Innern des statischen Mischers im Bereich von etwa 20°C bis 200°C, vorzugsweise 60°C bis 140°C. Bei "reiner" Kakaomasse bzw. dunkler Schokolade ohne oder mit geringem Milchpulveranteil können höhere Temperaturen verwendet werden, während bei Schokolademassen zur Schonung des Milcheiweisses die etwas tieferen Temperaturen bevorzugt werden. Dabei erweisen sich Temperaturen Ober 100°C als besonders vorteilhaft, da dann durch den stark angestiegenen Dampfdruck auch aus dem Innern der Masse Wasserdampf zu entweichen beginnt ("Sieden, Kochen"). Der Druck des strömenden Gases im Innern des statischen Mischers beträgt vorzugsweise 0,5 bis 25 bar, vorzugsweise 1 bis 20 bar.

Vorzugsweise werden die aus dem statischen Mischer austretenden Gase von dem Masse/Gas-Gemisch entfernt. Zweckmässigerweise lässt man die nach dem Transport durch den statischen Mischer austretende Masse erneut eine Veredelungsstufe durchlaufen, wobei z.B. die Masse mehrmals durch denselben statischen Mischer transportiert wird oder die Masse durch mehrere in Serie geschaltete statische Mischer transportiert wird. Dadurch kann der Veredelungsgrad der Masse weiter gesteigert werden.

Im Falle der Veredelung von Schokolademasse kann diese ergänzend in einem zusätzlichen Schritt mechanisch und/oder thermisch bearbeitet werden, wie z.B. in einer traditionellen Conche, wobei man diesen Schritt sowohl vor oder während als auch nach dem erfindungsgemässen Veredetungsschritt durchführen kann. Die Conchierzeit lässt sich dadurch verkürzen. Auf diese Weise lässt sich das Veredelungsverfahren für Schokolade und somit die Eigenart der Schokolade noch weiter variieren.

Die erfindungsgemässe Veredelungsstufe kann vor oder nach dem statischen Mischer zusätzlich einen Dispergierschritt aufweisen, um Agglomerate, die sich ggf. nach dem Verlassen des statischen Mischers bilden, wieder aufzulösen. Hierfür kann z.B. eine Stiftmühle oder eine Rührwerkskugelmühle verwendet werden.

Zweckmässigerweise wird als Gas ein Stickstoff/Sauerstoff-Gemisch, wie z.B. Luft, verwendet, das vorzugsweise mit Aroma angereichert bzw. abgereichert wird.

Bei der Fettmasse kann es sich auch um Öl handeln.

Die erfindungsgemässe Anlage zur Durchführung des Verfahrens enthält einen für die Veredelungsstufe ausgebildeten Anlagenteil mit einem statischen Mischer, der über eine erste Zuleitung mit einem Vorratsbehälter für die förderbare Fettmasse, insbesondere kakaohaltige oder schokoladeähnliche Fettmassen, verbunden ist, wobei eine mit einer Gasquelle verbundene zweite Zuleitung, in der sich ein Kompressor befindet, stromaufseitig von dem statischen Mischer in die erste Zuleitung einmündet, so dass die Masse mittels des Gases in den statischen Mischer hinein und durch diesen hindurch transportierbar ist.

Durch die Einmündung der für das Heranpumpen von Gas bestimmten zweiten Zuleitung in die für den Transport der Masse bestimmte erste Zuleitung wird die Masse von dem Gas mitgerissen und in den statischen Mischer hinein und durch ihn hindurch transportiert. Die überwiegende mechanische Pumpleistung für den Transport durch den statischen Mischer stammt von dem Kompressor in der Gasleitung. Im Gegensatz zu den meisten klassischen Veredelungsverfahren erfolgt hier der Energieeintrag in die Masse vorwiegend thermisch durch die Wärmeenergie des Gases sowie in geringerem Ausmass mechanisch durch das Pumpen der Kakao- oder Schokolademasse und des Gases.

Zweckmässigerweise verlässt eine Austrittsleitung den statischen Mischer an seinem stromabseitigen Ende, wobei diese Austrittsleitung zweckmässigerweise eine Verzweigung, insbesondere in Form eines Dreiwegeventils, aufweist.

Vorzugsweise befindet sich in der Zuleitung eine Pumpe zum Fördern der Masse, so dass man von der Schwerkraft als Förderkraft weitgehend unabhängig ist.

Bei einer besonders bevorzugten Ausführung ist die Einmündung als Zerstäubungsdüse ausgebildet, in der durch die erste Zuleitung geförderte bzw. gepumpte Masse durch komprimiertes Gas aus der zweiten Zuleitung zerstäubt werden kann. Dadurch lässt sich schon vor dem Eintritt des Masse/Gas-Gemisches in den statischen Mischer ein hoher Dispersionsgrad erreichen, der dann durch die wiederholten Zusammenstösse der Tröpfchen mit den Einbauten noch weiter gesteigert wird.

Zweckmässigerweise befindet sich in der zweiten Zuleitung eine Heizvorrichtung für das Gas. Mit ihr kann die Temperatur des durch den Kompressor herangepumpten Gases und somit die Temperatur im Innern des statischen Mischers gezielt eingestellt werden.

In einer bevorzugten Ausführung weist die erfindungsgemässe Anlage mehrere Anlagenteile mit jeweils einem statischen Mischer und jeweils einer ersten und einer zweiten Zuleitung auf, wobei die statischen Mischer in Serie geschaltet sind, so dass die Masse sequentiell durch die mehreren statischen Mischer transportierbar wird, und stromaufseitig von jedem statischen Mischer jeweils die eine mit der Gasquelle verbundene zweite Zuleitung in die jeweilige erste Zuleitung einmündet. Dies ermöglicht den weiter oben erwähnten mehrstufigen Veredelungsvorgang der Fettmasse.

Bei Bedarf können die statischen Mischer auch parallel geschaltet sein, wodurch sich durch Hinzuschalten oder Abschalten einzelner paralleler Zweige leicht Kapazitätsanpassungen erzielen lassen.

Bei einer besonders bevorzugten Ausgestaltung ist das Gas ein Stickstoff/Sauerstoff-Gemisch. Durch gezielte Einstellung des Mischungsverhältnisses kann das Gasgemisch neben seiner thermischen und mechanischen Wirkung (Erwärmung und Transport der zu veredelnden Masse) dann auch beispielsweise mehr oder weniger oxidierend auf die zu veredelnde Masse einwirken.

Man kann auch ganz einfach Luft als Transport- und Behandlungsgas verwenden, wobei das Gas noch zusätzlich mit weiteren gasförmigen gewollten Aromastoffen versetzt werden kann. Dies ist besonders vorteilhaft, weil damit gewisse Stoffe dem Gleichgewicht selektiv entzogen, aber auch gezielt im Gleichgewicht belassen werden können.

Als Gas kann auch Wasserdampf oder feuchte Luft verwendet werden.

Der für die Veredelungsstufe bestimmte erfindungsgemässe Anlagenteil kann insbesondere eine oder mehrere Dispergiervorrichtungen enthalten, womit ggf. auch einer Agglomerierung der in der Masse suspendierten Kakao-, Zucker-, Milchpulver oder anderen Feststoffpartikel entgegengewirkt werden kann.

Weitere Vorteile, Merkmale, Gesichtspunkte und Anwendungsmöglichkeiten der Erfindung ergeben sich aus der nun folgenden nicht einschränkend aufzufassenden Beschreibung eines erfindungsgemässen Ausführungsbeispiels anhand der Zeichnung, wobei:
- Fig. 1: eine schematische Darstellung einer bevorzugten Anlage zur Durchführung des erfindungsgemässen Verfahrens zeigt; und
- Fig. 2: die Änderung des Wassergehaltes einer durch das erfindungsgemässe Verfahren mit einem statischen Mischer und mit warmer Luft behandelten Dunkelschokolademasse in Abhängigkeit von der Anzahl der Durchgänge zeigt.

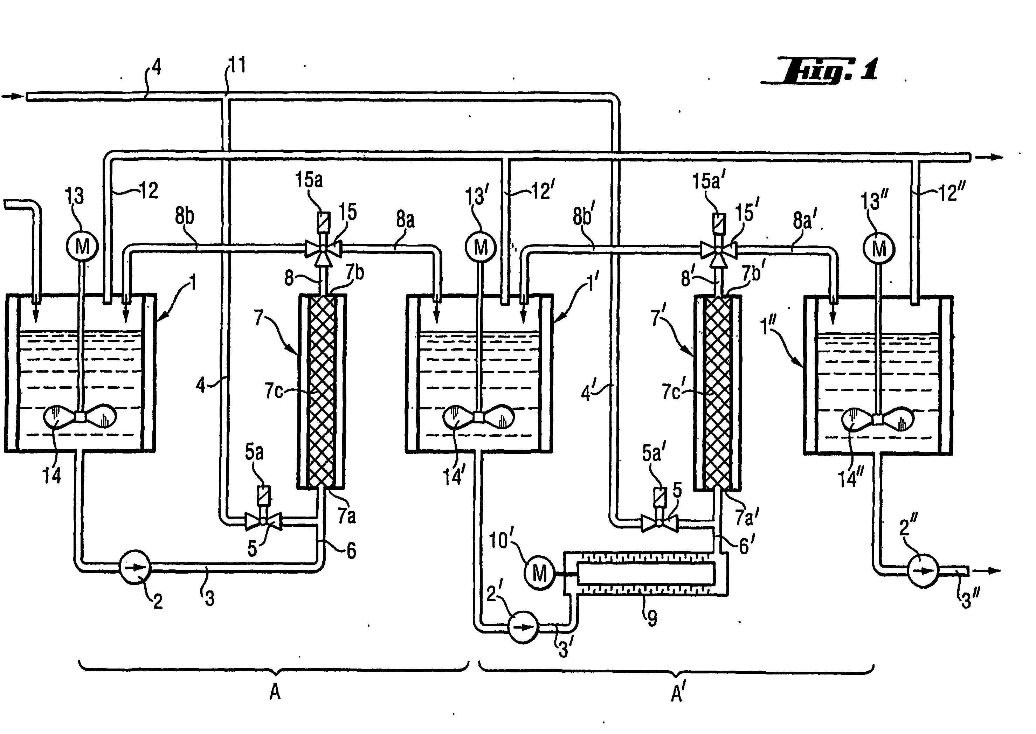

Fig. 1 zeigt einen Ausschnitt aus einer mehrstufig arbeitenden Anlage für die Durchführung des erfindungsgemässen Verfahrens zur Veredelung von Fettmassen, bei denen es sich insbesondere um kakaohaltige oder schokoladeähnliche Fettmassen oder um Fettmassen an sich, u.a. auch um Öle, handelt.

In der ersten Stufe A des Ausschnitts ist ein erster Tank 1 für die Lagerung der Masse an seinem unteren Bereich über eine Masse-Zuleitung 3, in der sich eine Pumpe 2 befindet, mit einem ersten statischen Mischer 7 verbunden. Eine Gas-Zuleitung 4, durch die mittels eines (nicht gezeigten) Kompressors komprimierte Luft gepumpt werden kann, enthält ein Stellventil 5 und mündet bei einer Einmündung 6 in die Masse-Zuleitung 4, die in das Eingangsende 7a des statischen Mischers 7 mündet. Aus dem Ausgangsende 7b des statischen Mischers 7 führt eine Austrittsleitung 8 heraus, die sich über ein Dreiwegeventil 15 verzweigt, wobei der Zweig 8a in einen zweiten Tank 1' mündet, der ähnlich wie der erste Tank 1 aufgebaut ist, und der Zweig 8b in den Tank 1 rückgeführt ist. Der erste Tank 1 enthält einen Rührer 14, der von einem Motor 13 angetrieben wird. Wie der erste Tank 1 enthält auch der zweite Tank 1' einen Rührer 14', der von einem Motor 13' angetrieben wird. Sowohl der erste Tank 1 als auch der zweite Tank 1' weisen jeweils eine von ihrem jeweiligen oberen Bereich aus wegführende Abgasleitung 12 bzw. 12' auf.

Diese erste Stufe A enthält alle wesentlichen Elemente zur Durchführung des erfindungsgemässen Verfahrens. Im Betrieb wird die in dem ersten Tank 1 gelagerte und durch eine (nicht gezeigte) Tankheizung warm gehaltene und durch den Rührer 14 ständig bewegte zu veredelnde Masse mittels der Pumpe 2 durch die Masse-Zuleitung 3 gepumpt. Gleichzeitig wird durch den (nicht gezeigten) Kompressor über die Gas-Zuleitung 4 komprimierte Luft durch das Stellventil 5 gepumpt. An der Einmündung 6, bei der sich die Masse-Zuleitung 3 und die Gas-Zuleitung 4 vereinen, wird durch die in die Einmündung strömende Druckluft die flüssige Masse aus Kakao oder Schokolade mitgerissen und in den statischen Mischer 7 an dessen Eingangsende 7a transportiert. Während des Transports durch den statischen Mischer 7 prallen die mehr oder weniger kleinen Tröpfchen der im Luftstrom mitgerissenen Masse wiederholt gegen die Einbauten 7c im Innern des statischen Mischers 7, wodurch sich die auf die Einbauten 7c prallenden Tröpfchen abflachen, so dass die Tröpfchenoberfläche vergrössert wird. Die durch den Aufprall plattgedrückten Tröpfchen werden durch den Luftstrom wieder mitgeführt. Dieser Vorgang wiederholt sich vielmals während des Durchlaufs durch den statischen Mischer bei allen Tröpfchen. Auf diese Weise können zahlreiche ungewollte flüchtige Aromastoffe aus der zu veredelnden Masse entweichen und werden im Druckluftstrom abgeführt. Am Ausgangsende 7b des statischen Mischers 7 angekommen, verlässt die veredelte Masse den statischen Mischer 7 über die Austrittsleitung 8 und gelangt in den zweiten Tank 1', in dem sie für die Weiterverarbeitung zwischengelagert werden kann. Durch die Bewegung des Rührers 14 bzw. 14' wird das Entweichen der noch zum Teil in der Masse enthaltenen "Abgase" begünstigt, in denen die ungewollten flüchtigen Aromastoffe enthalten sind. Sie steigen in Form von Blasen aus der im ersten Tank 1 bzw. im zweiten Tank 1' enthaltenen Masse auf und gelangen Ober die Abgasleitung 12 bzw. 12' ins Freie oder werden Ober ein z.B. aus Aktivkohle bestehendes (nicht gezeigtes) Filter geleitet, um die an sich harmlosen Gase aufzunehmen.

In der zweiten Stufe A' des Ausschnitts der Anlage ist der zweite Tank 1', in dem die aus der ersten Stufe A stammende veredelte Masse enthalten ist, ebenfalls an seinem unteren Bereich über eine Masse-Zuleitung 3', in der sich eine Pumpe 2' befindet, mit einem statischen Mischer 7' verbunden. Allerdings befindet sich in dieser zweiten Stufe A' in der Masse-Zuleitung 3'.ausser einer Pumpe 2' noch eine von einem Motor 10 angetriebene Dispergiervorrichtung 9, wie z.B. eine Stiftmühle oder eine Rührwerkskugelmühle. Ähnlich wie bei der Stufe A verläuft eine Gas-Zuleitung 4', die von der Gas-Zuleitung 4 bei einer Verzweigung 11 abzweigt, über ein Steliventil 5' und mündet bei einer Einmündung 6' in die Masse-Zuleitung 3', die in das Eingangsende 7a' des statischen Mischers 7' mündet. Aus dem Ausgangsende 7b' des statischen Mischers 7' führt wiederum eine Austrittsleitung 8' heraus, die sich ebenfalls über ein Dreiwegeventil 15' verzweigt. Der Zweig 8a' mündet in einen dritten Tank 1", der ähnlich wie der erste Tank 1 oder der zweite Tank 1' aufgebaut ist, während der andere Zweig 8b' in den Tank 1' rückgeführt ist. Wie der zweite Tank 1' enthält auch der dritte Tank 1" einen Rührer 14", der von einem Motor 13" angetrieben wird, und weist ebenfalls eine von seinem oberen Bereich aus wegführende Abgasleitung 12" auf. Im unteren Bereich verlässt den dritten Tank 1" eine Masse-Zuleitung 3", die ebenfalls eine Pumpe 2" enthält. Diese Masse-Zuleitung 3" führt bei der in Fig. 1 gezeigten zweistufigen Anlage zu einer Weiterverarbeitungsstufe z.B. zum Giessen der gewonnenen veredelten Schokolademasse in Formen oder zur Verwendung als Überzugsmaterial für Pralinen.

Die zweite Stufe A' enthält gegenüber der ersten Stufe A zusätzlich die Dispergiervorrichtung 9. Im Betrieb finden in der zweiten Stufe A' dieselben Vorgänge wie in der ersten Stufe A statt. Hinzu kommt jedoch die desagglomerierende Wirkung der Dispergiervorrichtung 9.

Bei Bedarf können beliebig viele Stufen A, A', etc. in Serie geschaltet werden, wobei der Fluss der von Stufe zu Stufe zunehmend veredelten Masse sich über die Masse-Zuleitungen 3, 3', 3", etc., die statischen Mischer 7, 7', etc. und die Austrittsleitungen 8, 8', etc. kontinuierlich erstreckt. In jeder Stufe wird dann bei einer Einmündung 6, 6', etc. vor dem jeweiligen statischen Mischer 7, 7', etc. ggf. trockene und heisse Pressluft (40 bis 120°C) über die jeweilige Gas-Zuleitung 4, 4', etc. in die jeweilige Masse-Zuleitung 3, 3', etc. eingeleitet. Sie reisst die Masse mit und entzieht ihr im anschliessenden statischen Mischer die ungewollten flüchtigen Aromastoffe. Das aus dem jeweiligen statischen Mischer 7, 7', etc. austretende Gemisch aus gasförmiger und flüssiger Phase gelangt dann über die jeweiligen Austrittsleitungen 8, 8', etc. in den jeweils stromab befindlichen Tank 1', 1", in dem dann die Trennung der Phasen stattfindet und die Abluft über die jeweilige Abgasleitung 12, 12', 12" etc. entfernt wird. Diese mehrstufige Anlage ermöglicht es daher, ein und dieselbe zu veredelnde Kakao- oder Schokolademasse auf ihrem "Weg" durch die Anlage in jeder Stufe immer wieder erneut mit ggf. trockener und heisser Frischluft zu "spülen", so dass die unangenehmen Aromastoffe sowie Wasser aus der Masse entfernt werden.

Ausserdem können die Stellventile 5, 5', etc. durch Stellglieder 5a, 5a', etc. betätigt werden, die wiederum einer Prozess-Steuerung oder Prozess-Regelung unterliegen.

Um die Zerstäubung der Masse bei den Einmündungen 6, 6', etc. durch den Pressluftstrom aus den Gas-Zuleitungen 4, 4', etc. zu optimieren, können diese Einmündungen als Zerstäubungsdüse (nicht gezeigt) ausgebildet sein.

Schliesslich kann in jeder Gas-Zuleitung 4, 4', etc. eine Heizvorrichtung vorgesehen sein, mit der in jeder Veredelungsstufe die Luft und damit die Masse im statischen Mischer 7, 7', etc. gezielt erwärmt werden können.

Die Dreiwegeventile 15 und 15' können über ihnen zugeordnete Stellglieder 15a bzw. 15a' je nach Bedarf so eingestellt werden, dass mehr oder weniger Masse in den jeweils stromaufseitigen Tank 1 bzw. 1' rückgeführt wird.

In jeder Veredelungsstufe bieten sich daher zahlreiche veränderliche Parameter an, wie z.B.:
1) Durchsatz der Masse in der jeweiligen Masse-Zuleitung 3, 3':
   Einstellung erfolgt durch die jeweilige Pumpe 2, 2'.
2) Durchsatz des Gases in der jeweiligen Gas-Zuleitung 4, 4':
   Einstellung erfolgt durch das jeweilige Stellventil 5, 5' und durch Kompressor in
   Leitung 4.
3) Druck des Gases in der jeweiligen Gas-Zuleitung 4, 4':
   Einstellung erfolgt durch das jeweilige Stellventil 5, 5' und durch Kompressor in
   Leitung 4.
4) Dispersionsgrad/Zerstäubungsgrad der Masse bei Eintritt in den statischen Mischer 7, 7':
   Einstellung erfolgt durch die jeweilige Zerstäubungsdüse.
5) Temperatur im statischen Mischer 7, 7':
   Einstellung erfolgt durch Heizvorrichtung in Gas-Zuleitung 3, 3'.

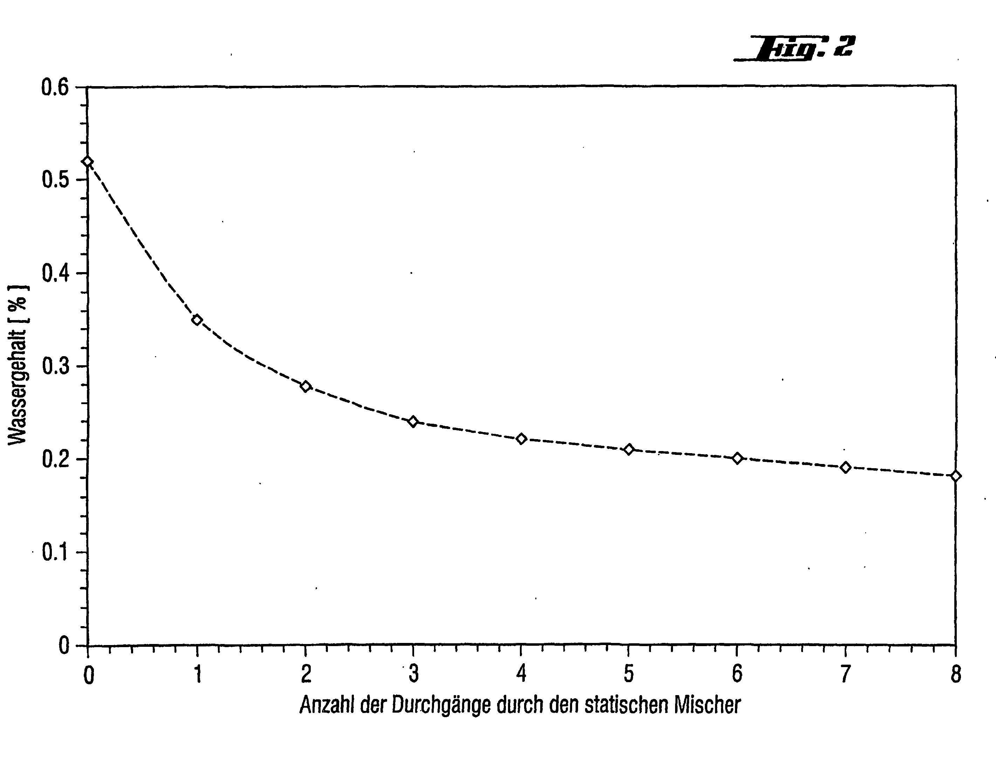

Fig. 2 zeigt das Ergebnis des erfindungsgemässen Verfahrens, nämlich die Änderung des Wassergehaltes einer durch das erfindungsgemässe Verfahren mit einem statischen Mischer und mit warmer Luft behandelten Dunkelschokolademasse in Abhängigkeit von der Anzahl der Durchgänge. Nach drei Durchgängen durch den statischen Mischer ist der anfängliche Wassergehalt von etwa 0,5 % schon halbiert. Nach acht Durchgängen beträgt der Wassergehalt noch ca. 0,2 %.

### Bezugszeichenliste

- A, A': Stufe
- 1, 1', 1": Tank
- 2, 2', 2": Pumpe
- 3, 3', 3": Masse-Zuleitung
- 4, 4', 4": Gas-Zuleitung
- 5, 5', 5": Stellventil
- 5a, 5a': Stellglied
- 6, 6': Einmündung
- 7, 7': statischer Mischer
- 7a, 7a': Eingangsende
- 7b, 7b': Ausgangsende
- 7c, 7c': Einbauten
- 8, 8': Austrittsleitung
- 8a, 8b: Zweig der Austrittsleitung
- 8a', 8b': Zweig der Austrittsleitung
- 9: Dispergiervorrichtung
- 10: Motor
- 11: Verzweigung
- 12,12', 12": Abgasleitung
- 13, 13', 13": Motor
- 14,14', 14": Rührer
- 15,15': Verzweigung, Dreiwegeventil
- 15a, 15a': Stellglieder

## Patentansprüche

1. Verfahren zur Veredelung förderfähiger Fettmassen, insbesondere kakaohaltiger oder schokoladeähnlicher Fettmassen, **dadurch gekennzeichnet, dass** in einer Veredelungsstufe die Masse mittels eines Gases in einen statischen Mischer mit Einbauten hinein und durch diesen hindurch transportiert wird, indem gleichzeitig mit der Masse das Gas oder ein Gasgemisch durch den statischen Mischer hindurch gepumpt und vermischt wird, wobei die Oberfläche der im statischen Mischer transportierten Masse ständig verändert und neu gebildet wird und dabei dem Gas ausgesetzt ist und der Stoffübergang intensiviert wird, so dass Feuchtigkeit sowie weitere flüchtige Bestandteile aus der Masse in die Gasphase entweichen und mit dem Gasstrom abgeführt werden.

2. Verfahren nach Anspruch 1, **dadurch gekennzeichnet, dass** die Veränderung und Neubildung der Oberfläche der mit dem Gasstrom transportierten Masse **dadurch** erfolgt, dass die in dem Gasstrom transportierte und zu Tröpfchen zerstäubte Masse wiederholt auf die Einbauten des statischen Mischers prallt und von dem Gasstrom mitgerissen werden, wobei die Gasphase die kontinuierliche Phase bildet .

3. Verfahren nach Anspruch 1 oder 2, **dadurch gekennzeichnet, dass** das Verhältnis zwischen dem Volumendurchsatz des Gases und dem Volumendurchsatz der Masse zwischen 100:1 und 0,5:1, vorzugsweise zwischen 60:1 und 10:1 und vorteilhafterweise bei etwa 20:1 liegt.

4. Verfahren nach einem der Ansprüche 1 bis 3, **dadurch gekennzeichnet, dass** die Temperatur im Innern des statischen Mischers etwa 20°C bis 200°C, vorzugsweise 60°C bis 140°C, beträgt.

5. Verfahren nach einem der Ansprüche 1 bis 4, **dadurch gekennzeichnet, dass** der Druck des strömenden Gases im Innern des statischen Mischers im Bereich von 0,5 bis 25 bar, insbesondere zwischen 1 und 20 bar liegt.

6. Verfahren nach einem der Ansprüche 1 bis 5, **dadurch gekennzeichnet, dass** aus dem aus dem statischen Mischer austretenden Masse/Gas-Gemisch die gasförmigen Bestandteile entfernt werden.

7. Verfahren nach einem der Ansprüche 1 bis 6, **dadurch gekennzeichnet, dass** die nach dem Transport durch den statischen Mischer austretende Masse erneut eine Veredelungsstufe durchläuft.

8. Verfahren nach Anspruch 7, **dadurch gekennzeichnet, dass** die Masse mehrmals durch denselben statischen Mischer transportiert wird.

9. Verfahren nach Anspruch 7, **dadurch gekennzeichnet, dass** die Masse durch mehrere in Serie geschaltete statische Mischer transportiert wird.

10. Verfahren nach Anspruch 7, **dadurch gekennzeichnet, dass** die Masse durch mehrere parallel geschaltete statische Mischer verteilt transportiert wird.

11. Verfahren nach einem der Ansprüche 1 bis 10, **dadurch gekennzeichnet, dass** die Masse in einem zusätzlichen Schritt mechanisch und/oder thermisch bearbeitet wird.

12. Verfahren nach einem der Ansprüche 1 bis 11, **dadurch gekennzeichnet, dass** die Veredelungsstufe zusätzlich einen Dispergierschritt aufweist.

13. Verfahren nach einem der Ansprüche 1 bis 12, **dadurch gekennzeichnet, dass** das Gas Wasserdampf ist.

14. Verfahren nach einem der Ansprüche 1 bis 12, **dadurch gekennzeichnet, dass** das Gas ein Stickstoff/Sauerstoff-Gemisch ist.

15. Verfahren nach einem der Ansprüche 1 bis 12, **dadurch gekennzeichnet, dass** das Gas Luft ist.

16. Verfahren nach Anspruch 15, **dadurch gekennzeichnet, dass** das Gas feuchte Luft ist.

17. Verfahren nach einem der vorhergehenden Ansprüche, **dadurch gekennzeichnet, dass** das Gas mit Aroma angereichert oder abgereichert wird.

18. Verfahren nach einem der vorhergehenden Ansprüche, **dadurch gekennzeichnet, dass** man das Gas mit weiteren gasförmigen gewollten Aromastoffen versetzt.

19. Verfahren nach einem der vorhergehenden Ansprüche, **dadurch gekennzeichnet, dass** die Fettmasse ein Öl ist.

20. Anlage zur Durchführung des Verfahrens gemäss einem der Ansprüche 1 bis 19, **gekennzeichnet durch** einen für die Veredelungsstufe ausgebildeten Anlagenteil mit einem statischen Mischer (7, 7'), der an seinem stromaufseitigen Ende über eine erste Zuleitung (3, 3') mit einem Vorratsbehälter (1, 1') für förderfähige Fettmassen, insbesondere kakaohaltige oder schokoladeähnliche Fettmassen, verbunden ist, wobei eine mit einer Gasquelle verbundene zweite Zuleitung (4, 4') für komprimiertes Gas stromaufseitig von dem statischen Mischer (7, 7') in die erste Zuleitung (3, 3') einmündet (6, 6'), so dass die Masse mittels des Gases in den statischen Mischer hinein und **durch** diesen hindurch transportierbar ist.

21. Anlage nach Anspruch 20, **dadurch gekennzeichnet, dass** eine Austrittsleitung (8, 8') den statischen Mischer (7, 7') an seinem stromabseitigen Ende verlässt.

22. Anlage nach Anspruch 20 oder 21, **dadurch gekennzeichnet, dass** sich in der Zuleitung (3, 3') eine Pumpe (2, 2') zum Fördern der Masse befindet.

23. Anlage nach Anspruch 20 bis 22, **dadurch gekennzeichnet, dass** die Einmündung (6, 6') als Zerstäubungsdüse ausgebildet ist, in der durch die erste Zuleitung (3, 3') geförderte Masse durch ein komprimiertes Gas aus der zweiten Zuleitung (4, 4') zerstäubt werden kann.

24. Anlage nach Anspruch 20 bis 23, **dadurch gekennzeichnet, dass** sich in der zweiten Zuleitung eine Heizvorrichtung für das Gas befindet

25. Anlage nach einem der Ansprüche 20 bis 24, **dadurch gekennzeichnet, dass** sie mehrere Anlagenteile mit jeweils einem statischen Mischer (7, 7', ....) und jeweils einer ersten und einer zweiten Zuleitung (3, 3', ....; 4, 4', .....) aufweist, wobei die statischen Mischer (7,7', ....) in Serie geschaltet sind, so dass die Masse sequen tiell durch die mehreren statischen Mischer transportierbar ist, und stromaufseitig von jedem statischen Mischer jeweils die eine mit der Gasquelle verbundene zweite Zuleitung (4, 4', ....) in die jeweilige erste Zuleitung (3, 3', ....) einmündet.

26. Anlage nach einem der Ansprüche 20 bis 24, **dadurch gekennzeichnet, dass** sie mehrere Anlagenteile mit jeweils einem statischen Mischer (7, 7', ....) und jeweils einer ersten und einer zweiten Zuleitung (3, 3', ....; 4, 4', .....) aufweist, wobei die statischen Mischer (7, 7', ....) parallel geschaltet sind, so dass die Masse parallel durch die mehreren statischen Mischer transportierbar ist, und stromaufseitig von jedem statischen Mischer jeweils die eine mit der Gasquelle verbundene zweite Zuleitung (4, 4', ....) in die jeweilige erste Zuleitung (3, 3', ....) einmündet.

27. Anlage nach einem der Ansprüche 20 bis 26, **dadurch gekennzeichnet, dass** mindestens eine der Austrittsleitungen (8, 8') eine Verzweigung (15, 15') aufweist, an der sich die jeweilige Austrittsleitung (8, 8') in einen ersten Zweig (8a, 8a') und in einen zweiten Zweig (8b, 8b') verzweigt

28. Anlage nach Anspruch 27, **dadurch gekennzeichnet, dass** der zweite Zweig (8b, 8b') der Austrittsleitung (8, 8') in einen stromaufseitigen Vorratsbehälter (1, 1') rückgeführt ist.

29. Anlage nach Anspruch 27 oder 28, **dadurch gekennzeichnet, dass** die Verzweigung (15, 15') ein Dreiwegeventil ist.

30. Anlage nach einem der Ansprüche 20 bis 29, **dadurch gekennzeichnet, dass** der Anlagenteil der Veredelungsstufe eine Vorrichtung zur mechanischen und/oder thermischen Bearbeitung der Masse aufweist.

31. Anlage nach einem der Ansprüche 20 bis 30, **dadurch gekennzeichnet, dass** der Anlagenteil der Veredelungsstufe eine Dispergiervorrichtung (9) aufweist.

32. Fettmasse, insbesondere kakaohaltige oder schokoladeähnliche Fettmasse, die mittels des Verfahrens nach einem der Ansprüche 1 bis 19 veredelt wurde.

## Claims

1. A method for surface finishing conveyable fatty substance, in particular cocoa-containing or chocolaty fatty substances, **characterized in that**, in a surface finishing step, the substance is transported by means of a gas into and through a static mixture with built-ins, **in that** the gas or a gas mixture is pumped simultaneously with the substance through the static mixture and mixed together, wherein the surface of the substance transported in the static mixer is continuously varied and reformed, exposed to the gas in the process, and the mass transfer is intensified, so that moisture and other volatile constituents from the substance escape into the gas phase, and are carried away with the gas stream.

2. The method according to claim 1, **characterized in that** the surface of the substance transported with the gas is changed and reformed by repeatedly exposing the built-ins in the static mixture to the substance transported in the gas stream and atomized into droplets, and having the gas stream entrain them.

3. The method according to claim 1 or 2, **characterized in that** the ratio between the volumetric throughput of the gas and the volumetric throughput of the substance lies between 100:1 and 0.5:1, preferably between 60:1 and 10:1, and advantageously at about 20:1.

4. The method according to one of claims 1 to 3, **characterized in that** the temperature inside the static mixer measures about 20°C to 200°C, preferably 60°C to 140°C.

5. The method according to one of claims 1 to 4, **characterized in that** the pressure of the streaming gas inside the static mixer ranges from 0.5 to 25 bar, in particular between 1 and 20 bar.

6. The method according to one of claims 1 to 5, **characterized in that** the gaseous constituents are removed from the substance/gas mixture exiting the static mixer.

7. The method according to one of claims 1 to 6, **characterized in that** the substance exiting after transported through the static mixer again runs through a surface finishing step.

8. The method according to claim 7, **characterized in that** the substance is repeatedly transported through the same static mixer.

9. The method according to claim 7, **characterized in that** the substance is transported through several serially connected static mixers.

10. The method according to claim 7, **characterized in that** the substance is separately transported through several parallel-connected static mixers.

11. The method according to one of claims 1 to 10, **characterized in that** the substance is machined or heat treated in an additional step.

12. The method according to one of claims 1 to 11, **characterized in that** the surface finishing stage also has a dispersing step.

13. The method according to one of claims 1 to 12, **characterized in that** the gas is water vapor.

14. The method according to one of claims 1 to 12, **characterized in that** the gas is a nitrogen/oxygen mixture.

15. The method according to one of claims 1 to 12, **characterized in that** the gas is air.

16. The method according to claim 15, **characterized in that** the gas is moist air.

17. The method according to one of the preceding claims, **characterized in that** the gas is enriched or depleted with aroma.

18. The method according to one of the preceding claims, **characterized in that** the gas is reacted with additional gaseous, desired aromatic substances.

19. The method according to one of the preceding claims, **characterized in that** the fatty substance is an oil.

20. A system for executing the method according to one of claims 1 to 19, **characterized by** a system section designed for the surface finishing step with a static mixer (7, 7'), whose upstream end is connected with a first supply line (3, 3') with a supply tank (1, 1') for conveyable fatty substances, in particular cocoa-containing or chocolaty fatty substances, wherein a second supply line (4, 4') for compressed gas connected with a gas source empties (6, 6') into the first supply line (3, 3') upstream from the static mixer (7, 7'), so that the substance is transported into and through the static mixer by the gas.

21. The system according to claim 20, **characterized in that** an outlet line (8, 8') exits the static mixer (7, 7') at its downstream end.

22. The system according to claim 20 or 21, **characterized in that** the supply line (3, 3') has a pump (2, 2') for conveying the substance.

23. The system according to claim 20 to 22, **characterized in that** the inlet (6, 6') is designed as an atomizing nozzle, in which the substance conveyed through the first supply line (3, 3') can be atomized by a compressed gas from the second supply line (4, 4').

24. The system according to claim 20 to 23, **characterized in that** the second supply line incorporates a heating device for the gas.

25. The system according to one of claims 20 to 24, **characterized in that** it has several system parts each with a static mixer (7, 7', ...) and each with a first and second supply line (3, 3', ...; 4, 4', ...), wherein the static mixers (7, 7', ...) are connected in series, so that the substance can be transported sequentially through the several static mixers, and the second supply line (4, 4', ...) respectively connected with the gas source upstream from each static mixer empties into the respective first supply line (3, 3', ...) .

26. The system according to one of claims 20 to 24, **characterized in that** it has several system parts each with a static mixer (7, 7', ...) and each with a first and second supply line (3, 3' , ...; 4, 4' , ...), wherein the static mixers (7, 7', ...) are connected in parallel, so that the substance can be transported parallel through the several static mixers, and the second supply line (4, 4', ...) respectively connected with the gas source upstream from each static mixer empties into the respective first supply line (3, 3', ...) .

27. The system according to one of claims 20 to 26, **characterized in that** at least one of the outlet lines (8, 8') has a branching (15, 15') where the respective outlet line (8, 8') bifurcates into a first branch (8a, 8a') and in a second branch (8b, 8b').

28. The system according to claim 27, **characterized in that** the second branch (8b, 8b') of the outlet line (8, 8') is routed back into an upstream storage tank (1, 1')

29. The system according to claim 27 or 28, **characterized in that** the branching (15, 15') is a three-way valve.

30. The system according to one of claims 20 to 29, **characterized in that** the system part of the surface finishing stage has a device for machining and/or heat treating the substance.

31. The system according to one of claims 20 to 30, **characterized in that** the system part of the surface finishing stage has a dispersing device (9).

32. Fatty substance, in particular a cocoa-containing or chocolaty fatty substance, which was surface finished using the method according to one of claims 1 to 19.

## Revendications

1. Procédé de raffinage de masses de graisse transportables, notamment de masses de graisse contenant du cacao ou analogues à du chocolat, **caractérisé en ce qu'**au cours d'une étape de raffinement, la masse est transportée à l'aide d'un gaz dans un mélangeur statique muni de chicanes et à travers ce dernier, **en ce que** simultanément à la masse, le gaz ou un mélange gazeux est pompé à travers le mélangeur statique et mélangé, la surface de la masse transportée dans le mélangeur statique étant sans cesse modifiée et reconstituée et exposée au gaz à cet effet et le transfert de substances étant intensifié, pour que l'humidité, ainsi que divers éléments volatils passent de la masse dans la phase gazeuse et soient évacués avec le flux gazeux.

2. Procédé selon la revendication 1, **caractérisé en ce que** la modification et la reconstitution de la surface de la masse transportée par le flux gazeux sont assurées **en ce que** la masse transportée dans le flux gazeux et pulvérisée en gouttelettes ricoche de façon répétée sur les chicanes du mélangeur statique et est entraînée par le flux gazeux, la phase gazeuse formant la phase continue.

3. Procédé selon la revendication 1 ou 2, **caractérisé en ce que** le rapport entre le débit volumétrique du gaz et le débit volumétrique de la masse se situe entre 100:1 et 0,5:1, de préférence entre 60:1 et 10:1 et avantageusement à environ 20:1.

4. Procédé selon l'une quelconque des revendications 1 à 3, **caractérisé en ce que** la température à l'intérieur du mélangeur statique est d'environ 20°C à 200°C, de préférence d'environ 60° C à 140°C.

5. Procédé selon l'une quelconque des revendications 1 à 4, **caractérisé en ce que** la pression du gaz qui circule à l'intérieur du mélangeur statique se situe dans la plage de 0,5 à 25 bar, de préférence entre 1 et 20 bar.

6. Procédé selon l'une quelconque des revendications 1 à 5, **caractérisé en ce que** les éléments gazeux sont éliminés de la masse/du mélange gazeux sortant du mélangeur statique.

7. Procédé selon l'une quelconque des revendications 1 à 6, **caractérisé en ce que** la masse sortant après le transport à travers le mélangeur statique repasse à travers une étape de raffinage.

8. Procédé selon la revendication 7, **caractérisé en ce que** la masse est transportée à plusieurs reprises à travers le même mélangeur statique.

9. Procédé selon la revendication 7, **caractérisé en ce que** la masse est transportée à travers plusieurs mélangeurs statiques montés en série.

10. Procédé selon la revendication 7, **caractérisé en ce que** la masse est transportée de façon divisée à travers plusieurs mélangeurs montés en parallèle.

11. Procédé selon l'une quelconque des revendications 1 à 10, **caractérisé en ce que** la masse est soumise à un traitement mécanique et/ou thermique au cours d'une étape supplémentaire.

12. Procédé selon l'une quelconque des revendications 1 à 11, **caractérisé en ce que** l'étape de raffinage comporte en supplément une étape de dispersion.

13. Procédé selon l'une quelconque des revendications 1 à 12, **caractérisé en ce que** le gaz est de la vapeur d'eau.

14. Procédé selon l'une quelconque des revendications 1 à 12, **caractérisé en ce que** le gaz est un mélange azote/oxygène.

15. Procédé selon l'une quelconque des revendications 1 à 12, **caractérisé en ce que** le gaz est de l'air.

16. Procédé selon la revendication 15, **caractérisé en ce que** le gaz est de l'air humide.

17. Procédé selon l'une quelconque des revendications précédentes, **caractérisé en ce que** le gaz est enrichi ou appauvri en arômes.

18. Procédé selon l'une quelconque des revendications précédentes, **caractérisé en ce qu'**on mélange le gaz à d'autres substances aromatiques gazeuses souhaitées.

19. Procédé selon l'une quelconque des revendications précédentes, **caractérisé en ce que** la masse de graisse est une huile.

20. Installation pour réaliser le procédé selon l'une quelconque des revendications 1 à 19, **caractérisée par** une partie d'installation conçue pour l'étape de raffinage, avec un mélangeur statique (7, 7') qui sur son extrémité située en amont est relié par une première conduite d'alimentation (3, 3') avec un réservoir de stockage (1, 1') pour des masses de graisse transportables, notamment des masses de graisse contenant du cacao ou analogues à du chocolat, une seconde conduite d'alimentation (4, 4') de gaz comprimé, qui est reliée à une source de gaz débouchant (6, 6') dans la première conduite d'alimentation (3, 3'), en amont du mélangeur statique (7, 7'), pour que la masse soit transportable par le gaz à l'intérieur du mélangeur statique et à travers celui-ci.

21. Installation selon la revendication 20, **caractérisée en ce qu'**une conduite d'évacuation (8, 8') sort du mélangeur statique (7, 7') sur son extrémité située en aval.

22. Installation selon la revendication 20 ou 21, **caractérisée en ce qu'**une pompe (2, 2') de transport de la masse se trouve dans la conduite d'alimentation (3, 3').

23. Installation selon la revendication 20 à 22, **caractérisée en ce que** l'embouchure (6, 6') est conçue en tant que buse de vaporisation, dans laquelle une masse transportée à travers la première conduite d'alimentation (3, 3') peut être vaporisée par un gaz comprimé hors de la seconde conduite d'alimentation (4, 4').

24. Installation selon la revendication 20 à 23,
**caractérisée en ce qu'**un dispositif de chauffage pour le gaz se trouve dans la seconde conduite d'alimentation.

25. Installation selon l'une quelconque des revendications 20 à 24, **caractérisée en ce qu'**elle comporte plusieurs parties d'installation avec chacune un mélangeur statique (7, 7', ...) et chacune une première et une deuxième conduite d'alimentation (3, 3', ... ; 4, 4', ...), les mélangeurs statiques (7, 7' , ...) étant montés en série, pour que la masse soit transportable de façon séquentielle à travers les plusieurs mélangeurs statiques et pour qu'en amont de chaque mélangeur statique, respectivement la deuxième conduite d'alimentation (4, 4', ...) reliée à la source de gaz débouche dans la première conduite d'alimentation respective (3, 3', ...).

26. Installation selon l'une quelconque des revendications 20 à 24, **caractérisée en ce qu'**elle comporte plusieurs parties d'installation avec chacune un mélangeur statique (7, 7', ...) et chacune une première et une deuxième conduite d'alimentation (3, 3', ... ; 4, 4', ...), les mélangeurs statiques (7, 7', ...) étant montés en parallèle, pour que la masse soit transportable en parallèle à travers les plusieurs mélangeurs statiques et pour qu'en amont de chaque mélangeur statique, respectivement la deuxième conduite d'alimentation (4, 4', ...) reliée à la source de gaz débouche dans la première conduite d'alimentation respective (3, 3', ...) .

27. Installation selon l'une quelconque des revendications 20 à 26, **caractérisée en ce qu'**au moins l'une des conduites d'évacuation (8, 8') comporte une ramification (15, 15'), à laquelle la conduite d'évacuation respective (8, 8') se ramifie en une première branche (8a, 8a') et en une deuxième branche (8b, 8b').

28. Installation selon la revendication 27, **caractérisée en ce que** la deuxième branche (8b, 8b') de la conduite d'évacuation (8, 8') est ramenée dans un réservoir de stockage (1, 1') situé en amont.

29. Installation selon la revendication 27 ou 28, **caractérisée en ce que** la ramification (15, 15') est une vanne à trois voies.

30. Installation selon l'une quelconque des revendications 20 à 29, **caractérisée en ce que** la partie de l'installation pour l'étape de raffinage comporte un dispositif pour le traitement mécanique et/ou thermique de la masse.

31. Installation selon l'une quelconque des revendications 20 à 30, **caractérisée en ce que** la partie d'installation pour l'étape de raffinage comporte un dispositif de dispersion (9).

32. Masse de graisse, notamment masse de graisse contenant du cacao ou analogue à du chocolat, qui a été raffinée à l'aide du procédé selon l'une quelconque des revendications 1 à 19.
